Europäisches Patentamt

European Patent Office

Office européen des brevets

(11) Publication number: **0 489 207 A1**

# EUROPEAN PATENT APPLICATION

(21) Application number: 90313234.8

(22) Date of filing: 06.12.90

(51) Int. Cl.5: **A23L 1/22**, A23P 1/04, A21D 2/08

(43) Date of publication of application:
**10.06.92 Bulletin 92/24**

(84) Designated Contracting States:
**AT BE CH DE DK ES FR GB GR IT LI LU NL SE**

(71) Applicant: **UNITED BISCUITS (UK) LIMITED**
**Grant House, Syon Lane**
**Isleworth Middlesex TW7 5NN(GB)**

(72) Inventor: **Hammond, Eugene Wiliam**
**Aisling, Warkton**
**Kettering, Northampton, NN16 9XG(GB)**
Inventor: **Hicks, Ruth Marian**
**Wood End, Shirwell's Hill, Goring Heath**
**Reading, Berkshire, RG8 7SP(GB)**
Inventor: **Smart, Ian William**
**85 Clearbrook Close, Loudwater**
**High Wycombe, Buckinghamshire HP13**
**7BS(GB)**
Inventor: **Watts, Anthony, Department of**
**Biochemistry**
**University of Oxford, South Parks Road**
**Oxford, 0X1 3OU(GB)**

(74) Representative: **Ackroyd, Robert et al**
**W.P. THOMPSON & CO. Eastcheap House**
**Central Approach**
**Letchworth, Hertfordshire SG6 3DS(GB)**

(54) **Flavouring of food products.**

(57) The flavouring composition comprises liposomes containing entrained flavouring material, the liposomes being dispersed in a fat-based edible medium, for example a biscuit cream. The liposomes are preferably formed from a mixture of hardened and unhardened lipids, preferably lecithin, in order to obtain desirable flavour-release temperature characteristics. The entrained flavouring material is an aqueous flavour phase containing a natural, nature-identical or other flavoured material. The flavoured biscuit cream is prepared by first combining fat and sugar and then adding a blend of hardened and unhardened lecithins and the aqueous flavour phase, in which liposomes containing the flavoured material are formed.

This invention relates to the flavouring of food products.

It is often desired in the manufacture of fat-based (which term is to be understood in this specification and its claims to include also oil-based) food products such as chocolate and biscuit fillings to disperse a flavouring material throughout the fat-based food product. In the past, this has been achieved by the formation of an emulsion of the flavouring material in the fat-based medium. Such emulsions typically comprise water droplets of about 0.5 $\mu$m in diameter. The emulsions however often contain at least some droplets of very much larger diameter (up to several tens of micrometers); some droplets could thus have volumes which are up to $10^4$ or more times larger than the smallest droplets. Thus, even if the number of large droplets is small, their total volume is a large proportion of the dispersed flavouring.

Water-based droplets of the sizes mentioned in the preceding paragraph lead to particular problems in cream and filled biscuits, where a flavoured, fat-based medium is often in contact with relatively dry biscuit material, for example as in a cream sandwich biscuit. In these circumstances, there is an increasing tendency with increasing droplet size for water droplets to migrate from the filling into the biscuit material, to the detriment of the eating quality of both the biscuit and the filling.

The present invention provides an edible composition comprising a fat-based edible medium and, dispersed therein, liposomes containing entrained flavouring material.

The invention also provides, for use in the production of such an edible composition, liposomes containing entrained flavouring material. The lipsomes may be in aqueous suspension or, preferably, may be dried to form a solid phase, for example a paste.

Further, the invention provides a method of flavouring a fat-based edible medium, the method comprising forming liposomes in the presence of water-soluble flavouring material, in order to entrain flavouring material within the liposomes, and dispersing the liposomes with flavouring material entrained therein in the fat-based medium.

In the product, also provided by the invention, of this process, the flavouring material may remain occluded by the liposomes, or may be released upon breakdown of the liposomes. If this latter occurs, the product will contain the flavouring material dispersed in the fat-based medium as droplets of very much smaller mean size than those formed by the known emulsion processes.

The invention thus takes advantage of the known property of lipids such as lecithin to form vesicles known as liposomes which have the ability to occlude or sequestrate relatively large volumes of aqueous materials whilst being themselves compatible with fat-based environments.

The diameter of the liposomes of the product and composition of the invention is advantageously less than 300 nm and preferably less than 100 nm. Diameters as small as 50 nm and even 25 nm are however possible. Larger diameters than 300 nm are also possible in appropriate circumstances. In most cases however the major part of the liposomes will have diameters within the range 50 to 300 nm.

Lecithin (i.e. phosphatidyl choline) preferably forms a major constituent of the lipid component of the liposomes of the present invention. The liposomes may however be formed in part from other lipids and, indeed, in practice lecithins of the purity grades lower the highly-purified pharmaceutical grade lecithins (containing 90% or more phosphatidyl choline) are conveniently used. Food grade lecithins having a lecithin content of from about 80% upwards are accordingly suitable. The non-lecithin content of such lecithin compositions is constituted for the most part by other lipids, for example other phospholipids, such as phosphatidyl ethanolamine and lysophosphatidyl choline, and neutral lipids.

The choice of liposome-forming material depends also upon the desirability of obtaining appropriate flavour release characteristics in the composition and product of the invention. The flavour release temperature of the liposomes is accordingly preferably in the range 28° to 40°C, that is to say the liposomes are heat-stable up to a temperature within this range. More preferably, the flavour-release temperature is at least 32°C.

To produce the desired flavour-release characteristics, the liposomes are advantageously formed from a mixture of hardened and unhardened lipids, the weight ratio of hardened to unhardened lipids being preferably in the range 1:1 to 4:9, the proportion of unhardened lipids preferably being such that the ratio is no greater than 5:8 and more preferably no greater than 6:7. In general, the greater the proportion of hardened lipids present, the higher will be the flavour-release temperature of the liposome-based flavouring compositions.

In this specification, the term "hardened lipid" means a lipid which is substantially fully hydrogenated, that is having an iodine value at or close to the minimum possible value of unity. It is of course necessary that, after hardening of unhardened lipids, a purification step be carried out in order to remove any remaining hardening catalyst or other undesirable impurity. Whilst unhardened lipids are often semi-liquid in nature, hardened lipids are usually solids which can, for example, be milled into a fine powder.

It has been found in particular that if a ratio of hardened to unhardened lipids is chosen such that the flavour-release temperature is higher than body temperature and no higher than 40°C (i.e. in the range 37° to 40°C), the flavour response of the liposome compositions is immediate and also lingering, these characteristics being more pronounced the higher the flavour release temperature. It is meant by "immediate" that a person eating a composition flavoured by the liposomes receives a pronounced flavour sensation very soon after the composition is first placed in the mouth; by "lingering" it is meant that the flavour sensation continues, for example for up to several minutes thus inducing a desire for eating more of the composition.

Without being bound to any theory, it is believed that the flavour-release temperature of the liposome compositions of the invention is related to a phase transition temperature at which the globular liposomes existing at lower temperatures undergo either a spontaneous change to a multi-lamellar hexagonal phase, which is much less efficient in entrapping water and flavouring material than the globular phase, or spontaneously disrupt releasing their trapped aqueous phase.

The very small particle sizes of the flavouring material, either as dispersed droplets or occluded by the liposomes, can thus give rise to a very strong flavour impact when the food composition is eaten, the liposomes (if still present as such) breaking down rapidly at mouth temperature and in an aqueous environment, as compared with the stabilising environment provided by the fat-based medium. It is also found that the water-migration problems referred to above can be avoided by use of liposome-based systems, where the very much smaller flavouring droplets have a much reduced tendency to migrate into the dry, biscuit material.

The source of the lipids used in the formation of compositions according to the present invention can be any suitable source compatible with the edible product applications envisaged. One particularly preferred source is soy bean lecithin which allows a product entirely of vegetable origin to be formed. Other sources include egg lecithin and other lecithins.

Suitable commercially-available substantially-pure soy bean lecithin fractions include "Schonat 80" and "Phospholipon 90", both available from Nattermann Phospholipid GmbH (a part of the Rhône-Poulenc Group) and both unhardened lecithins, "Phospholipon 90H" which is available from the same source and is hardened, and "Epicuron 200SH" which is also hardened and is available from Lucas Meyer GmbH of Hamburg. A commercially-available soy bean lecithin containing significant quantities of other lipids but still meeting the criteria for use in a food product is "Bolec FS" which is available from Unimills of Germany. The latter product requires purification before use, for example by acetone precipitation, the resulting product still retaining its non-lecithin phospholipid component but being perfectly adequate for food use.

The entrained flavouring material of the liposomes of the invention can be any natural or synthetic (nature-identical or otherwise) flavouring which is compatible with the material from which the liposomes are formed.

The entrained material constituting the flavour phase will contain an amount of flavoured material appropriate to the potency of the flavour and the desired flavour level in the final product. The entrained aqueous phase will accordingly usually be no more than 50% by weight flavoured material, preferably no more than 25% by weight flavoured material and most often no more than 5% by weight flavoured material. A typical entrained flavour phase is therefore up to 5% flavoured material with the balance water.

The flavours used can be virtually any, including for example, fruit flavours, for example raspberry and strawberry, chocolate flavours produced from cocoa bean extract, and water-soluble savoury flavours.

The liposomes of the present invention can be made by any of the known techniques. This includes hand shaking, homogenisation, ether or alcohol vaporisation techniques, sonication techniques and techniques involving microfluidsation, such as described by H Talsma et al in Drug Development and Industrial Pharmacy 15 (2), 197-207 (1989). The lecithin on which the liposomes is based is preferably pure lecithin but commercially-available lecithin fractions can be used instead. The flavouring material can be incorporated into the liposomes simply by its inclusion at an appropriate concentration in the aqueous phase in which the liposomes are formed by whichever method is chosen. After preparation, the temperature of the liposomes is maintained sufficiently low, for example below 30°C and, in any event below their flavour-release temperature, preferably at least 5°C therebelow, to maintain their stability.

Formation of the liposome flavouring material into a non-aqueous dispersion allows the material, for example in the form of a paste or a dry powder or a fat or oil dispersion (which may be liquid), to be stored and/or transported before its addition to the fat-based product, in which the liposome-based flavouring compositions can be dispersed by mixing of the fat-based product and the solid flavouring composition, if necessary after warming of the latter. This gives rise to particular advantages compared with the known emulsion techniques where the emulsions must be formed on-site with the food product and are not reliably shelf-stable.

A typical liposome flavouring composition can accordingly be prepared as follows: The following ingredients are placed in a wide-necked vessel, here a 100cm$^3$ beaker:

  Phosopholipon 90      18g

  Phosopholipon 90H     8g

  Aqueous flavouring composition

    (flavouring + water)  14cm$^3$

The ingredients are mixed under high shear conditions using an Ultra Turrax or a Silverson mixer for 5 min ensuring that the mixer probe is brought into contact with all the ingredients so they are thoroughly mixed. The temperature of the mix is maintained throughout at a temperature no higher than 30°C. The resulting product had a highly-whipped texture not unlike a meringue mixture.

To form a biscuit cream suitable for filling sandwich biscuits, the liposome flavouring material is mixed with sugar and fat pre-mixed in the bowl of a Kenwood plenetary mixture and the mixture blended for up to 5 min, again not allowing the temperature to exceed 30°C. The resulting product is a flavoured "butter" cream which can be stored or can be used immediately. Sensory testing procedures have shown that products with stable flavours over periods of up to 9 months can be prepared. Tests have also shown that cream sandwich biscuits containing the product can be stored for up to 2 months without any sensorily-detectable softening of the biscuit shells taking place.

EXAMPLES 1 to 10

The invention will now be described further by the following specific examples.

In each example, 1 kg of a typical "butter" cream suitable for use in a sandwich biscuit was prepared by pre-mixing the following ingredients in a Kenwood mixer as described in the general method above.

  refined icing sugar   600g

  BCF3 cream fat    400g

The cream fat used had a typical solid fat index, as measured on a Brücker "Minispec" pulsed NMR spectrometer as follows:

    N20   46-56

    N25   10-20

    N30    1-6

    N32.5   1-3

    N35    0-1

To this pre-mix were added respective liposome flavouring compositions prepared as described in the general method above, the compositions varying from example to example as shown in Table 1 which also gives the total weight of liposome flavouring composition added to 0.5 kg of "butter" cream prepared in each case as described above.

In further examples, the Phospholipon 90H can be replaced by Epicuron 200SH and/or the Phospholipon 90 replaced by Schonat 80 or by Bolec FS purified as described above.

TABLE 1

| Example | 1 | 2 | 3 | 4 | 5 | 6 | 7 | 8 | 9 | 10 |
|---|---|---|---|---|---|---|---|---|---|---|
| Hardened lecithin[1] | 9g | 8g | 7g | 6g | 5.2g | 5g | 6.5g | 7.5g | 4.5g | 4g |
| Unhardened lecithin[2] | 4g | 5g | 6g | 7g | 7.8g | 8g | 6.5g | 5.5g | 8.5g | 9g |
| Flavour phase Flavouring (1)[3] | 20 | 20 | 20 | 20 | 20 | 20 | 20 | 20 | 20 | 20cm³ |
| (2)[4] | 13.85 | 13.85 | 13.85 | 13.85 | 13.85 | 13.85 | 13.85 | 13.85 | 13.85 | 13.85cm³ |
|  | 0.15 | 0.15 | 0.15 | 0.15 | 0.15 | 0.15 | 0.15 | 0.15 | 0.15 | 0.15cm³ |
| Diluting water | 6 | 6 | 6 | 6 | 6 | 6 | 6 | 6 | 6 | 6cm³ |
| Amount of liposome flavouring added to 0.5kg of butter cream | 17g | 17g | 17g | 17g | 17g | 17g | 17g | 17g | 17g | 17g |

1 Phospholipon 90H or Epicuron 200SH
2 Phospholipon 90 or Schonat 80 or Bolec FS (purified as described above)
3 Worldwide Flavours Ltd F9557 raspberry flavouring (natural)
4 Worldwide Flavours Ltd F10194 raspberry flavouring (nature-identical)

**Claims**

1. An edible composition comprising liposomes containing entrained flavouring material.

2. A composition according to claim 1, in which lecithin forms a major constituent of the lipid component of the liposomes.

3. A composition according to claim 2, in which lecithin constitutes at least 80% by weight of the lipid component of the liposomes.

4. A composition according to any preceding claim in which the lipid components of the liposomes comprises hardened and unhardened lipids, the weight ratio of hardened to unhardened lipids being in the range 1:1 to 4:9.

5. A composition according to claim 4, in which the ratio of hardened to unhardened lipids is no greater than 5:8.

6. A composition according to claim 4, in which the ratio of hardened to unhardened lipids is no greater than 6:7.

7. A composition according to any preceding claim, in which substantially all the liposomes have a diameter of less than 300 nm.

8. A composition according to claim 7, in which substantially all the liposomes have a diameter which is also greater than 25 nm.

9. A composition according to any preceding claim, in which the entrained flavour phase is no more than 50% by weight flavoured material.

10. A composition according to any of claims 1 to 8, in which the entrained flavour phase is no more than 25% by weight flavoured material.

11. A composition according to any of claims 1 to 8, in which the entrained flavour phase is no more than 5% by weight flavoured material.

12. A composition according to any preceding claim in the form of a solid.

13. A composition according to claim 12, in the form of a paste or a dry powder.

14. A composition comprising a fat-based edible medium and, dispersed therein, liposomes according to any preceding claim.

15. A composition according to claim 14, having a flavour-release temperature in the range 28 to 40°C.

16. A composition according to claim 15, having a flavour-release temperature of at least 32°C.

17. A composition according to any of claims 14 to 16, in which the edible medium comprises fat and sugar and the composition is suitable for use as a biscuit filling.

18. A biscuit having a filling according to claim 17.

19. A method of flavouring a fat-based edible medium, comprising forming liposomes in the presence of water-soluble flavouring material, in order to entrain flavouring material within the liposomes, and dispersing the liposomes with flavouring material entrained therein in the fat-based medium.

20. A method according to claim 19 in which the fat-based edible medium comprises fat and sugar which are combined with each other separately and subsequently combined with the liposomes containing entrained flavouring material.

21. A method according to any of claims 19 or 20, in which the liposomes are formed by mixing lipids and an aqueous flavour composition.

22. A method according to any of claims 19 to 21, which is carried out at a temperature of at least 5°C lower than the flavour-release temperature of the liposomes.

6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 701 587 (BIOCOMPATIBLES) * Claims 1,14-20,26; example 1; page 9, lines 10-12 * | 1,2,9, 19,20 | A 23 L    1/22<br>A 23 P    1/04<br>A 21 D    2/08 |
| A | | 3-9,10-16,21, 22 | |
| A | GB-A-2 166 107 (L'OREAL) * Claims 1,21 * | 1 | |
| D,A | DRUG DEVELOPMENT AND INDUSTRIAL PHARMACY, vol. 15, no. 2, 1989, pages 197-207, Marcel Dekker, Inc.; H. TALSMA et al.: "The size reduction of liposomes with a high pressure homogenizer (microfluidizer tm). characterization of prepared dispersions and comparison with conventional methods" * The whole document * | 1 | |
| L | DERWENT PUBLICATIONS WORLD PATENT INDEX (WPIL), accession no. 91-021991 [03], Derwent Publications Ltd., London, GB; & WO-A-90 15 537 (NABISCO) (Cat. E) (Priority) | 1 | TECHNICAL FIELDS SEARCHED (Int. Cl.5)<br><br>A 23 L<br>A 23 P<br>A 21 D<br>A 61 K |

The present search report has been drawn up for all claims

| Place of search | Date of completion of the search | Examiner |
|---|---|---|
| THE HAGUE | 05-07-1991 | VAN MOER A.M.J. |